# EUROPÄISCHE PATENTSCHRIFT

(11) **EP 3 177 490 B1**
(45) Veröffentlichungstag und Bekanntmachung des Hinweises auf die Patenterteilung: **23.10.2019**
(21) Anmeldenummer: 15742311.2
(22) Anmeldetag: 29.07.2015
(51) Int. Cl.: B60S 1/38, B60S 1/34

(54) **ABDECKUNG FÜR FINRAY-WISCHER**
COVER FOR A FIN-RAY WIPER
SYSTÈME DE RECOUVREMENT POUR DES ESSUIE-GLACES FINRAY

(30) Priorität: 05.08.2014 DE 102014215375
(43) Veröffentlichungstag der Anmeldung: 14.06.2017
(73) Patentinhaber: Robert Bosch GmbH, 70442 Stuttgart (DE)
(72) Erfinder: HAUSER, Florian, 77855 Achern (DE); WEILER, Michael, 77815 Buehl (DE)
(86) Internationale Anmeldenummer: PCT/EP2015/067371
(87) Internationale Veröffentlichungsnummer: WO 2016/020238

(56) Entgegenhaltungen:
- DE-A1- 19 712 207
- DE-A1-102013 214 064
- GB-A- 2 500 369
- US-A- 4 342 126

## Beschreibung

Die Erfindung betrifft eine Scheibenwischvorrichtung für ein Fahrzeug, insbesondere ein Kraftfahrzeug.

### Stand der Technik

Scheibenwischvorrichtungen haben typischerweise einen Wischarm oder Wischhebel, wobei ein Wischblatt auf der Scheibe eines Kraftfahrzeugs bewegt wird. Dabei wird das Wischblatt zwischen einer ersten Wendelage und einer zweiten Wendelage bewegt. Zu diesem Zweck ist der Wischarm über die Antriebswelle mit einem Wischermotor verbunden. Insbesondere auf Windschutzscheiben mit starken Krümmungsänderungen verliert das Wischblatt leicht den Kontakt zur Scheibe. Hierdurch kann es, insbesondere bei stark gekrümmten Scheiben zu ungewischten Wischbereichen bzw. zu Schleierbildung kommen.

Da ein Wischvorgang auf eine Vielzahl von Parametern optimiert werden muss, wie zum Beispiel eine Regenmenge auf der Scheibe, eine eventuell auftretende Schneelast auf der Scheibe, die Geschwindigkeit des Fahrzeugs und damit einhergehender Winddruck auf den Wischarm, kann eine Schleierbildung nicht auf einfache Weise durch Anpassung des Drucks des Wischarms auf die Windschutzscheibe zuverlässig verhindert werden. Daher ist es ein Bedürfnis, Scheibenwischvorrichtungen weiter zu verbessern.

Bei der Verbesserung gibt es eine Mehrzahl von Randbedingungen, die zusätzlich berücksichtigt werden sollten. Dabei ist es auch ein Bedürfnis, die Handhabung bzw. die Benutzerfreundlichkeit zu verbessern sowie einen Schutz des Wischarms auf einer der Scheibe abgewandten Seite des Wischarms bzw. des Wischblatts zu gewährleisten bzw. zu verbessern.

Aus der DE 10 2013 214 064 A1 ist eine Scheibenwischvorrichtung mit den Merkmalen des Oberbegriffs des Anspruchs 1 bekannt. Weiterer Stand der Technik ist aus der US 4,342,126 A, aus der GB 2 500 369 A und aus der DE 197 12 207 A1 bekannt.

### Offenbarung der Erfindung

Es ist die Aufgabe der vorliegenden Erfindung, ein zuverlässiges, weitgehend schlierenfreies Wischen einer Scheibe eines Fahrzeugs zu gewährleisten, wobei ein Schutz des Wischarms auf einer der Scheibe abgewandten Seite des Wischarms bereitgestellt wird.

Diese Aufgabe wird gelöst durch eine Scheibenwischvorrichtung mit den Merkmalen gemäß Anspruch 1.

Gemäß einer Ausführungsform der vorliegenden Erfindung wird eine Scheibenwischvorrichtung für ein Fahrzeug, insbesondere ein Kraftfahrzeug, vorgeschlagen. Die Scheibenwischvorrichtung umfasst einen Wischarm mit einem Wischblatt mit einem langgestreckten Oberteil und einem langgestreckten Unterteil, welche zumindest teilweise biegbar ausgestaltet sind. Des Weiteren sind mehrere Verbindungselemente zum Verbinden des Oberteils und des Unterteils vorgesehen, wobei die Verbindungselemente entlang einer Längserstreckung des Wischblatts voneinander beabstandet und an dem Oberteil und/oder dem Unterteil mittels eines Drehgelenks angebracht sind. Die Verbindungselemente sind ausgelegt, um eine Bewegung des Oberteils und des Unterteils relativ zueinander mit einer Bewegungskomponente entlang einer Längserstreckung des Wischblatts zu ermöglichen. Die Scheibenwischvorrichtung umfasst ferner eine Abdeckvorrichtung, welche an einer Oberseite des Oberteils anbringbar ist und dafür ausgelegt ist, das Wischblatt an einer der Scheibe abgewandten Seite des Wischblatts abzudecken.

Bevorzugte Ausführungsformen und besondere Aspekte der Erfindung ergeben sich aus den abhängigen Ansprüchen, den Zeichnungen und der vorliegenden Beschreibung.

### Vorteile der Erfindung

Gemäß den hier beschriebenen Ausführungsformen der Erfindung können Scheibenwischvorrichtung für Fahrzeuge auf besonders günstige Weise und für eine Mehrzahl unterschiedlicher Einsatzgebiete hergestellt werden. Weiterhin ermöglichen es die Ausführungsformen der Erfindung, ein zuverlässiges, weitgehend schlierenfreies Wischen einer Scheibe eines Fahrzeugs, wobei ein Schutz des Wischarms bzw. des Wischblatts auf einer der Scheibe abgewandten Seite des Wischarms bereitgestellt werden kann.

Gemäß einer Ausführungsform der vorliegenden Erfindung wird eine Scheibenwischvorrichtung für ein Fahrzeug, insbesondere ein Kraftfahrzeug, vorgeschlagen. Die Scheibenwischvorrichtung umfasst einen Wischarm mit einem Wischblatt mit einem langgestreckten Oberteil und einem langgestreckten Unterteil, welche zumindest teilweise biegbar ausgestaltet sind. Des Weiteren sind mehrere Verbindungselemente zum Verbinden des Oberteils und des Unterteils vorgesehen, wobei die Verbindungselemente entlang einer Längserstreckung des Wischblatts voneinander beabstandet und an dem Oberteil und/oder dem Unterteil mittels eines Drehgelenks angebracht sind. Die Verbindungselemente sind ausgelegt, um eine Bewegung des Oberteils und des Unterteils relativ zueinander mit einer Bewegungskomponente entlang einer Längserstreckung des Wischblatts zu ermöglichen. Die Scheibenwischvorrichtung umfasst ferner eine Abdeckvorrichtung, welche an einer Oberseite des Oberteils anbringbar ist und welche dafür ausgelegt ist, das Wischblatt an einer der Scheibe abgewandten Seite des Wischblatts abzudecken.

Nach der Erfindung weist der Wischarm einen Wischblattkopf auf, wobei sich die Abdeckvorrichtung zusätzlich über den Wischblattkopf erstreckt. Auf diese Weise kann eine Abdeckvorrichtung bereitgestellt werden, welche sich einheitlich über den gesamten Wischarm, auf einer der Scheibe abgewandten Seite des Wischarms, erstreckt. Hierdurch wird der Vorteil erzielt, dass ein verbesserter Schutz des Wischarms und/oder von Teilstrukturen wie Verbindungselementen und Scharnieren des Wischblatts zur Verfügung gestellt werden kann.

Gemäß noch weiteren Ausführungsformen kann die Abdeckvorrichtung seitliche Führungsnuten aufweisen, welche dafür ausgelegt sind, in seitliche Strukturen am Oberteil des Wischblatts wie beispielsweise in seitliche Kanten, die am Oberteil des Wischblatts bereitgestellt sind, einzugreifen. Hierdurch wird die Anbringung der Abdeckvorrichtung an dem Wischblatt bzw. über dem gesamten Wischarm erleichtert.

Ferner ist es möglich, die Abdeckvorrichtung auf einfache Weise auszutauschen. Dies kann dann wünschenswert sein, wenn ein bestimmtes Design einer Abdeckvorrichtung gegen ein anderes Design ausgewechselt werden soll. Insbesondere können unterschiedliche, auswechselbare Abdeckvorrichtungen auch als Werbeträger für bestimmte Marken, als Aufschriftfläche für Beschriftungen und für Textpassagen und als Freifläche für Muster, Farben, Bildelemente, Logos, Marken und ähnliches genutzt werden.

Gemäß noch weiteren Ausführungsformen kann die Abdeckvorrichtung eine Klebefläche aufweisen, welche dafür ausgelegt ist, mit einer Oberseite des Oberteils des Wischblatts und/oder des Wischblattkopfs verklebt zu werden. Auf diese Weise wird der Vorteil erzielt, dass eine sichere und dauerhafte Befestigung der Abdeckvorrichtung an dem Wischarm bzw. an dem Wischblatt bereitgestellt wird.

Gemäß noch weiteren Ausführungsformen können die dem Wischblatt zugewandte Seite der Abdeckvorrichtung und die Oberseite des Oberteils des Wischblatts und/oder des Wischblattkopfs eine Klettverbindung bilden. Auf diese Weise wird der Vorteil erzielt, dass eine sichere Befestigung der Abdeckvorrichtung an dem Wischarm bzw. an dem Wischblatt bereitgestellt wird. Ferner ergibt sich der zusätzliche Vorteil, dass die Abdeckvorrichtung auf einfache Weise ausgetauscht werden kann.

Nach eine Alternative der Erfindung weist die dem Wischblatt zugewandte Seite der Abdeckvorrichtung mindestens einen Druckknopf auf, welcher dafür ausgelegt ist, in entsprechende Öffnungen in dem Oberteil des Wischblatts und/oder des Wischblattkopfs einzugreifen. Auf diese Weise lässt sich die Abdeckvorrichtung, die als flache Platte mit einer Flächenausdehnung entsprechend etwa der Oberfläche des Wischblatt-Oberteils und/oder des Wischblattkopf-Oberteils bereitgestellt werden kann, einfach gegen eine alternative Abdeckvorrichtung auswechseln.

Gemäß noch weiteren Ausführungsformen kann das Oberteil des Wischblatts eine nach oben vorstehende, umlaufende Kante aufweisen, die dafür ausgelegt ist, die Abdeckvorrichtung anzuklemmen. Hierbei ist es zweckmäßig, wenn die Dimensionen der Abdeckvorrichtung derart ausgelegt sind, dass eine Presspassung der Abdeckvorrichtung innerhalb der umlaufenden Kante des Wischblatt-Oberteils ermöglicht wird. Auf diese Weise werden eine einfache und schnelle Anbringung der Abdeckvorrichtung durch Einpressen innerhalb der umlaufenden Kante des Wischblatt-Oberteils und ebenso eine einfache Demontage der Abdeckvorrichtung ermöglicht.

Gemäß eine Alternative der Erfindung enthält die Abdeckvorrichtung ein ferromagnetisches Material. Ferner weist das Oberteil des Wischblatts und/oder der Wischblattkopf mindestens ein Permanentmagnetelement auf.

Auf diese Weise kann eine magnetische Kraft zur Verfügung gestellt werden, welche auf das ferromagnetische Material der Abdeckvorrichtung wirkt und diese an dem Wischblatt bzw. an dem Wischblattkopf hält. Hierdurch kann die Abdeckvorrichtung auf einfache Weise an dem Wischarm montiert bzw. von diesem abgenommen werden. Ein einfacher und kostengünstiger Austausch der Abdeckvorrichtung wird dadurch bereitgestellt, dass die Abdeckvorrichtung mittels Magnetkraft an dem Wischarm haftet. Hierbei kann eine dem Wischarm abgewandte Seite der Abdeckvorrichtung beispielsweise auch als Werbeträger für bestimmte Marken, als Aufschriftfläche für Beschriftungen und für Textpassagen und als Freifläche für Muster, Farben, Bildelemente, Logos, Marken und ähnliches genutzt werden. Gemäß noch weiteren Ausführungsformen kann die Oberseite der Abdeckvorrichtung reflektierend sein.

Gemäß noch weiteren Ausführungsformen kann die Abdeckvorrichtung ein Material enthalten, welches gewählt ist aus der Gruppe, die besteht aus Gummi, Carbon, POM, PA, TPE, insbesondere TPE-S, TPE-O, TPE-U, TPE-A TPE-V und TPE-E, oder jedweder Kombination davon. Auf diese Weise wird der Vorteil erzielt, dass durch eine geeignete Materialauswahl physikalische und insbesondere mechanische Eigenschaften der Abdeckvorrichtung eingestellt werden können.

Ferner ist es möglich, die Abdeckvorrichtung, den Wischarm oder zumindest Teile des Wischarms als integrale Bauteile in Spritzguss auszuführen, wodurch fertigungstechnische Vorteile erzielt werden, die eine kostengünstige Herstellung zulassen.

### Kurze Beschreibung der Zeichnungen

Ausführungsbeispiele der Erfindung sind in den Figuren dargestellt und werden im Folgenden näher beschrieben. Es zeigen:
Figur 1 eine perspektivische Darstellung eines Wischarms mit Wischblatt und Wischblattkopf,
Figur 2A eine Draufsicht auf eine Abdeckvorrichtung, die an einer Oberseite des in Figur 1 gezeigten Wischarms angebracht ist, gemäß Ausführungsformen der Erfindung,
Figur 2B eine Querschnittansicht der in Figur 2A dargestellten Abdeckvorrichtung, entlang einer in Figur 2A gezeigten Linie A-A, gemäß Ausführungsformen der Erfindung,
Figur 3 ein Beispiel einer Oberseite einer Abdeckvorrichtung, welche eine Aufschriftfläche für Beschriftungen aufweist, gemäß Ausführungsformen der Erfindung,
Figur 4 ein Beispiel einer Oberseite einer Abdeckvorrichtung, welche eine Freifläche für Bildelemente aufweist, gemäß Ausführungsformen der Erfindung,
Figur 5A eine schematische Darstellung eines weiteren Ausführungsbeispiels einer erfindungsgemäßen Scheibenwischvorrichtung in Form eines Wischerarms mit integriertem Wischblatt in einer Grundstellung,
Figur 5B eine schematische Darstellung des Wischerarms mit integriertem Wischblatt nach Figur 5A in einer an eine Scheibe angelegten Stellung,
Figur 6 eine schematische Darstellung eines Wischblatts gemäß Ausführungsformen vorliegenden Erfindung in einer Grundstellung, und
Figur 7 eine schematische Darstellung eines Wischblatts gemäß Ausführungsformen der vorliegenden Erfindung in einer an eine Scheibe angelegten Stellung.

### Ausführungsformen der Erfindung

Im Folgenden werden, sofern nicht anders vermerkt, für gleiche und gleichwirkende Elemente gleiche Bezugszeichen verwendet.

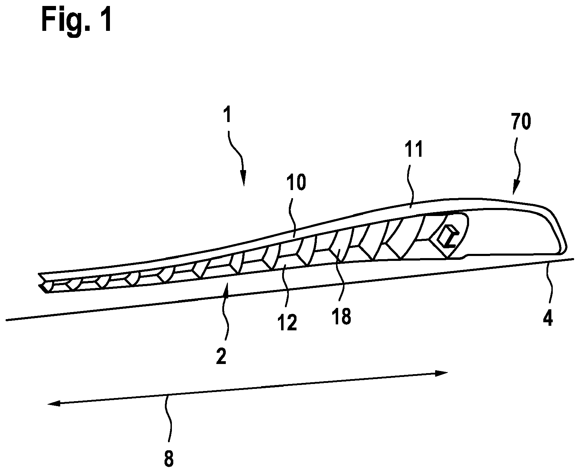

Figur 1 zeigt eine schematische Darstellung eines Wischarms 1 einer Scheibenwischvorrichtung für ein Fahrzeug, insbesondere für ein Kraftfahrzeug. In der perspektivischen Darstellung der Figur 1 ist ein Wischarm 1 mit Wischblatt 2 und Wischblattkopf 70 gezeigt, welcher von einer Antriebswelle einer Scheibenwischer-Antriebseinheit des Fahrzeugs abhebbar ist. Mit dem Wischkopf 70 verbunden ist ein Wischblatt 2, welches ein langgestrecktes Oberteil 10 und ein langgestrecktes Unterteil 12 aufweist, welche zumindest teilweise biegbar ausgestaltet sind. Mehrere Verbindungselemente 18 sind zum Verbinden des Oberteils 10 und des Unterteils 12 bereitgestellt, wobei die Verbindungselemente 18 entlang einer Längserstreckung 8 des Wischblatts 2 voneinander beabstandet und an dem Oberteil 10 und/oder an dem Unterteil 12 mittels eines Drehgelenks angebracht sind.

Die Verbindungselemente 18 sind derart ausgelegt sind, dass sie eine Bewegung des Oberteils 10 und des Unterteils 12 relativ zueinander mit einer Bewegungskomponente entlang der Längserstreckung 8 des Wischblatts 2 ermöglichen. Hierbei sind die Verbindungselemente 18 an dem Oberteil 10 an einer jeweiligen oberen Verbindungsposition verbunden und an dem Unterteil 12 an einer jeweiligen unteren Verbindungsposition. Zum Beispiel ist an den Verbindungspositionen jeweils ein Drehgelenk zur Verfügung gestellt. Bei einer Bewegung des Oberteils 10 und des Unterteil 12 relativ zueinander verändert sich der Abstand einer oberen Verbindungsposition zu einer unteren Verbindungsposition am selben Verbindungselement 18 im Wesentlichen nicht, d.h. der Abstand ist mit Abweichungen von zum Beispiel ±1 mm, insbesondere ±0,3 mm konstant.

Entlang der Längserstreckung 8 des Wischblatts 2 wird der Abstand zwischen dem Oberteil 10 und dem Unterteil 12 ausgehend vom Wischblattkopf 70 kleiner, zumindest in Bereichen der Längserstreckung 8 des Wischblatts 2 bzw. in einem überwiegenden Teil der Längserstreckung 8 des Wischblatts 2. Ausgehend vom Kopfende läuft die Höhe des Wischblatts 2 in Bereichen keilförmig zu bzw. wird in Bereichen der Längserstreckung 8 kleiner. Zum Beispiel kann gemäß Ausführungsformen für eine Mehrzahl der Verbindungselemente 18 die Länge der Verbindungselemente 18 derart zur Verfügung gestellt werden, dass die in der Nähe des Wischblattkopfs 70 zur Verfügung gestellten Verbindungselemente 18 länger sind als die an der gegenüberliegenden Seite 34 des Wischblatts 2 entlang der Längserstreckung 8.

Durch diese Eigenschaften kann ein Wischblatt 2 zur Verfügung gestellt werden, das nach dem Finray-Prinzip funktioniert.

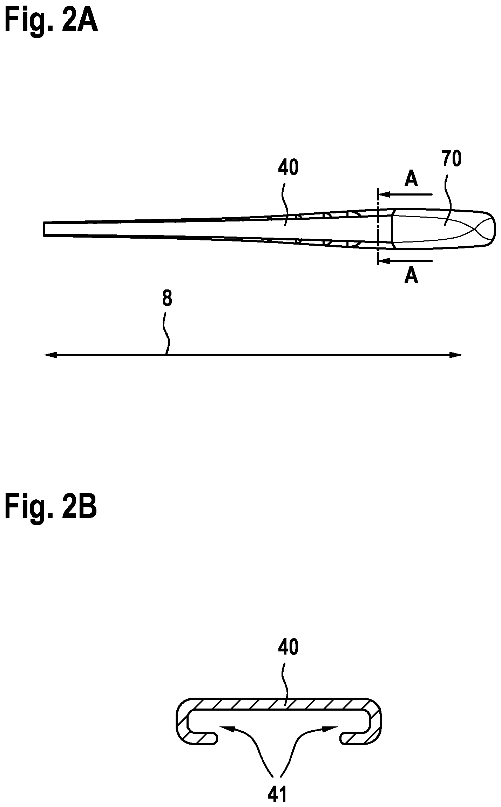

Die Scheibenwischvorrichtung kann ferner eine Abdeckvorrichtung 40, siehe Figur 2A, aufweisen, welche an einer Oberseite 11 des Oberteils 10 des Wischblatts 2 anbringbar ist und welche dafür ausgelegt ist, das Wischblatt 2 an einer der Scheibe 4 abgewandten Seite des Wischblatts 2 abzudecken. Ausführungsformen von Abdeckvorrichtungen 40 sind untenstehend unter Bezugnahme auf die Figuren 2A, 2B, 3 und 4 beschrieben.

Figur 2A zeigt eine Draufsicht auf eine Abdeckvorrichtung, die an der Oberseite 11 des in Figur 1 gezeigten Wischarms angebracht ist, gemäß Ausführungsformen der Erfindung. Bei der in Figur 2A gezeigten Anordnung erstreckt sich die Abdeckvorrichtung 40 lediglich über das Wischblatt 2 und nicht über den Wischblattkopf 70. Gemäß weiteren hierin beschriebenen Ausführungsformen, welche mit anderen hierin beschriebenen Ausführungsformen kombiniert werden können, kann sich die Abdeckvorrichtung 40 zusätzlich auch über den Wischblattkopf 70 erstrecken. Auf diese Weise kann eine Abdeckvorrichtung 40 bereitgestellt werden, welche sich entlang der Längserstreckung 8 des Wischarms 1 einheitlich über den gesamten Wischarm 1, auf einer der Scheibe 4 abgewandten Seite des Wischarms 1, erstreckt. Hierdurch wird der Vorteil erzielt, dass ein verbesserter Schutz des Wischarms 1 und/oder von Teilstrukturen wie Verbindungselementen 18 und Scharnieren des Wischblatts 2 erreicht werden kann.

Figur 2B zeigt eine Querschnittansicht der in Figur 2A dargestellten Abdeckvorrichtung 40, entlang einer in Figur 2A gezeigten Schnittlinie A-A, gemäß Ausführungsformen der Erfindung, Wie in der Querschnittansicht der Figur 2B dargestellt, weist die Abdeckvorrichtung 40 seitliche Führungsnuten 41 auf, welche dafür ausgelegt sind, in seitliche Strukturen am Oberteil 10 des Wischblatts 2 einzugreifen.

Derartige seitliche Strukturen können beispielsweise als seitliche Kanten oder seitliche Vorsprünge, die am Oberteil 10 des Wischblatts 2 angeordnet sind, bereitgestellt werden. Hierdurch wird die Anbringung der Abdeckvorrichtung 40 an dem Wischblatt 2 bzw. über dem gesamten Wischarm 1, beispielsweise durch Aufschieben der Abdeckvorrichtung 40, von links in Figur 2A, über das Oberteil 10 des Wischblatts 2 erleichtert.

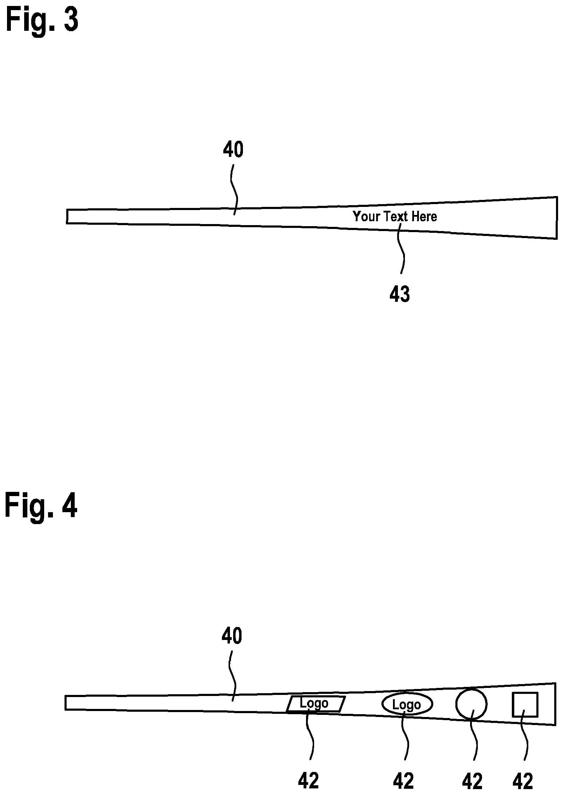

Gemäß weiteren Ausführungsformen ist es möglich, die Abdeckvorrichtung auf einfache Weise auszutauschen. Dies kann dann wünschenswert sein, wenn ein bestimmtes Design einer Abdeckvorrichtung gegen ein anderes Design ausgewechselt werden soll. Insbesondere können unterschiedliche, auswechselbare Abdeckvorrichtungen auch als Werbeträger für bestimmte Marken, als Aufschriftfläche für Beschriftungen und für Textpassagen und als Freifläche für Muster, Farben, Bildelemente, Logos, Marken und ähnliches genutzt werden, wie untenstehend unter Bezugnahme auf die Figuren 3 und 4 beschrieben.

Figur 3 stellt ein Beispiel einer Oberseite einer Abdeckvorrichtung 40 dar, welche eine Aufschriftfläche für Beschriftungen 43 und Textpassagen aufweist, gemäß Ausführungsformen. In Figur 4 ist ein Beispiel einer Oberseite einer Abdeckvorrichtung 40 gezeigt, bei der eine Freifläche für Bildelemente 42 wie etwa Muster, Farben, Logos, Marken und ähnliches bereitgestellt ist, gemäß weiteren Ausführungsformen.

Gemäß noch weiteren Ausführungsformen kann die Abdeckvorrichtung 40 eine Klebefläche aufweisen, welche dafür ausgelegt ist, mit der Oberseite 11 des Oberteils 10 des Wischblatts 2 und/oder des Wischblattkopfs 70 verklebt zu werden. Eine derartige Klebeverbindung kann eine sichere und insbesondere eine dauerhafte Befestigung der Abdeckvorrichtung 40 an dem Wischarm 1 bzw. an dem Wischblatt 2 gewährleisten.

Gemäß noch weiteren Ausführungsformen können die dem Wischblatt 2 zugewandte Seite der Abdeckvorrichtung 40 und die Oberseite 11 des Oberteils 10 des Wischblatts 2 und/oder des Wischblattkopfs 70 eine Klettverbindung bilden. Hierbei kann an der Abdeckvorrichtung 40 ein Teil des Klettverschlusses angebracht sein, während an der Oberseite 11 des Oberteils 10 des Wischblatts 2 und/oder auf dem Wischblattkopf 70 das Gegenstück der Klettverbindung angebracht sein kann. Auf diese Weise wird der Vorteil erzielt, dass eine sichere Befestigung der Abdeckvorrichtung 40 an dem Wischarm 1 bzw. an dem Wischblatt 2 bereitgestellt wird. Ferner ergibt sich der zusätzliche Vorteil, dass die Abdeckvorrichtung 40 auf einfache Weise ausgetauscht bzw. ersetzt werden kann.

Gemäß noch weiteren Ausführungsformen kann die dem Wischblatt 2 zugewandte Seite der Abdeckvorrichtung 40 mindestens einen Druckknopf aufweisen, welcher dafür ausgelegt ist, in entsprechende Öffnungen in dem Oberteil 10 des Wischblatts 2 und/oder des Wischblattkopfs 70 einzugreifen bzw. einzurasten. Auf diese Weise lässt sich die Abdeckvorrichtung 40, die als flache Platte mit einer Flächenausdehnung entsprechend etwa der Oberfläche des Wischblatt-Oberteils 10 und/oder des Wischblattkopf-Oberteils bereitgestellt werden kann, auf einfache Art gegen eine alternative Abdeckvorrichtung 40 auswechseln.

Gemäß noch weiteren Ausführungsformen kann das Oberteil 10 des Wischblatts 2 eine nach oben vorstehende, umlaufende Kante aufweisen, die dafür ausgelegt ist, die Abdeckvorrichtung 40 anzuklemmen. Hierbei ist es zweckmäßig, wenn die Dimensionen der Abdeckvorrichtung 40 derart ausgelegt sind, dass eine Presspassung der Abdeckvorrichtung 40 innerhalb der umlaufenden Kante des Wischblatt-Oberteils 10 ermöglicht wird. Auf diese Weise werden eine einfache und schnelle Anbringung der Abdeckvorrichtung 40 durch Einpressen innerhalb der umlaufenden Kante des Wischblatt-Oberteils 10 und ebenso eine einfache Demontage der Abdeckvorrichtung 40 ermöglicht.

Gemäß noch weiteren Ausführungsformen kann die Abdeckvorrichtung 40 ferner ein ferromagnetisches Material enthalten. Hierbei ist es zweckmäßig, wenn das Oberteil 10 des Wischblatts 2 und/oder der Wischblattkopf 70 mindestens ein Permanentmagnetelement aufweisen. Auf diese Weise kann eine magnetische Kraft zur Verfügung gestellt werden, welche auf das ferromagnetische Material der Abdeckvorrichtung 40 wirkt und diese an dem Wischblatt 2 bzw. an dem Wischblattkopf 70 hält. Hierdurch kann die Abdeckvorrichtung 40 auf einfache Weise an dem Wischarm 1 montiert bzw. von diesem demontiert werden. Ein einfacher und kostengünstiger Austausch der Abdeckvorrichtung 40 wird dadurch bereitgestellt, dass die Abdeckvorrichtung 40 mittels Magnetkraft an dem Wischarm 1 haftet. Hierbei kann eine dem Wischarm 1 abgewandte Seite der Abdeckvorrichtung 40 beispielsweise auch als Werbeträger für bestimmte Marken, als Aufschriftfläche für Beschriftungen und für Textpassagen und als Freifläche für Muster, Farben, Bildelemente, Logos, Marken und ähnliches genutzt werden. Gemäß noch weiteren Ausführungsformen, welche mit hierin beschriebenen Ausführungsformen kombiniert werden können, kann die Oberseite der Abdeckvorrichtung 40 reflektierend sein.

Gemäß noch weiteren Ausführungsformen kann die Abdeckvorrichtung 40 ein Material enthalten, welches gewählt ist aus der Gruppe, die besteht aus Gummi, Carbon, POM, PA, TPE, insbesondere TPE-S, TPE-O, TPE-U, TPE-A TPE-V und TPE-E, oder jedweder Kombination davon. Auf diese Weise wird der Vorteil erzielt, dass durch eine geeignete Materialauswahl physikalische, und insbesondere mechanische Eigenschaften der Abdeckvorrichtung 40 eingestellt werden können.

Ferner ist es möglich, die Abdeckvorrichtung 40, den Wischarm 1 oder zumindest Teile des Wischarms 1 als integrale Bauteile in Spritzguss auszuführen, wodurch fertigungstechnische Vorteile erzielt werden, die eine kostengünstige Herstellung zulassen.

Im Folgenden werden Aspekte einer beispielhaften Scheibenwischvorrichtung beschrieben, für welche die hierin beschriebenen Ausführungsformen der Scheibenwischvorrichtung, insbesondere die hierin beschriebenen Abdeckvorrichtungen 40 besonders vorteilhaft sind.

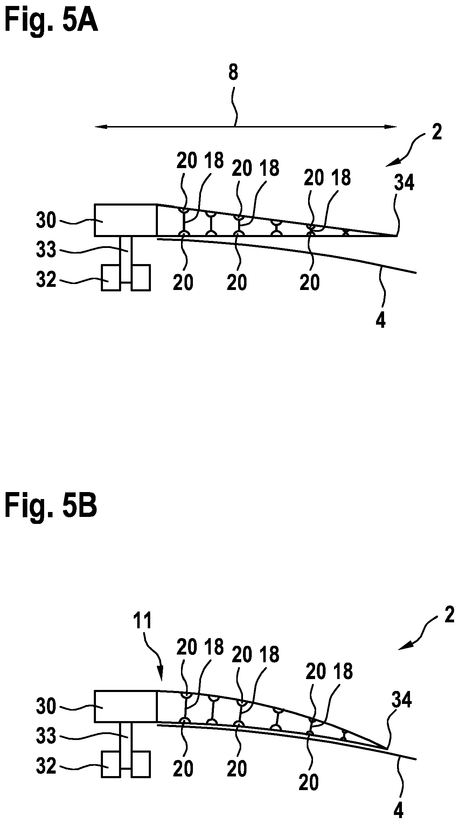

Figuren 5A und 5B zeigen schematische Darstellungen eines Wischblatts 2 in einer Grundstellung und in einer an eine Scheibe angelegten Stellung gemäß Ausführungsformen der Scheibenwischvorrichtung der Offenbarung. Es werden hier Fin-Ray-Wischer beschrieben, für die Abdeckvorrichtungen 40 gemäß der hier beschriebenen Ausführungsformen besonders nützlich ist. Die Abdeckvorrichtungen 40 sind in den Figuren 5A, 5B, 6 und 7 nicht erneut dargestellt und können auch in diesen Ausführungsformen wie zuvor beschrieben zur Verfügung gestellt werden. Das Wischblatt 2 dient zum Wischen einer Scheibe 4 eines Fahrzeugs, das zum Beispiel ein Kraftfahrzeug ist, insbesondere ein Auto. Das Wischblatt 2 hat eine Längserstreckung 8 und weist ein langgestrecktes Oberteil 10 und ein ebenfalls langgestrecktes Unterteil 12 auf. Die Längserstreckungen des Oberteils 10 und des Unterteils 12 entsprechen im Wesentlichen der Längserstreckung 8 des Wischblatts 2.

Sowohl das Oberteil 10 als auch das Unterteil 12 sind biegbare Balken oder können als biegbare Balken ausgestaltet sein Es ist ebenso möglich, nur jeweils einen Teil des Oberteils 10 und/oder des Unterteils 12 biegbar auszugestalten. Gemäß manchen Ausführungsformen, die mit den anderen hier beschriebenen Ausführungsformen kombiniert werden können, wird für das Oberteil 10 und/oder das Unterteil 12 ein Material eingesetzt, das einen Elastizitätsmodul hat, der in einem Bereich zwischen 0,005 kN/mm² und 0,5 kN/mm², insbesondere 0,01 kN/mm² und 0,1 kN/mm², liegt. Dies ermöglicht eine geeignete Biegefähigkeit des Oberteils 10 und des Unterteils 12. Zusammen mit einer geeignet ausgestalteten Querschnittsfläche des Oberteils 10 und des Unterteils 12 ergibt sich so eine optimale Biegesteifigkeit.

Das Oberteil 10 und das Unterteil 12 sind an dem wischblattseitigen Befestigungsteil 30 befestigt. Die Scheibenwischvorrichtung kann mittels des wischblattseitigen Befestigungsteils 30, zum Beispiel mit einer Quickfix-Befestigung, am Fahrzeug bzw. mit der Antriebsachse einer Scheibenwischer-Antriebseinheit (Wischermotor) des Fahrzeugs verbunden werden. Eine derartige Quickfix-Befestigung kann die Antriebswelle 33 der Scheibenwischvorrichtung mit dem Wischarm 1 schnell lösbar verbinden.

An der Seite, die dem Befestigungsteil 30 entlang der Längserstreckung 8 der Scheibenwischvorrichtung gegenüberliegt, ist das Oberteil 10 und das Unterteil 12 an einer Verbindungsposition 34 verbunden. Das Oberteil 10 und das Unterteil 12 sind durch Verbindungselemente 18 miteinander verbunden. Die Verbindungselemente 18 sind derart ausgestaltet, dass sich der Abstand der Verbindungsposition mit dem Oberteil 10 und der Abstand der Verbindungsposition mit dem Unterteil 12 um maximal +/- 1 mm ändert, insbesondere um maximal +/- 0,3 mm ändert (zum Beispiel durch Wärmeausdehnung und/oder Zug und Druckbelastung). Die Verbindungselemente 18 können somit im Wesentlichen nicht elastisch ausgebildet sein bzw. beruht der Effekt der Verbindungselemente 18 auf deren Kraftübertragung zwischen Oberteil 10 und Unterteil 12 und nicht auf deren Elastizität.

Die Verbindungselemente 18 sind an einander zugewandten inneren Längsseiten des Oberteils 10 und des Unterteils 12 mittels Drehgelenken 20 befestigt. Typischerweise sind die Drehgelenke 20 Scharniere. Insbesondere können die Drehgelenke 20 als Filmscharniere ausgebildet sein. Dies ist vor allem dann vorteilhaft, wenn das Oberteil 10, das Unterteil 12 und/oder die Verbindungselemente 18 aus einem Kunststoffmaterial hergestellt oder mit einem geeigneten Kunststoffmaterial überzogen sind.

Gemäß typischen hier beschriebenen Ausführungsformen, die mit anderen hier beschriebenen Ausführungsformen kombiniert werden können, ist ein Drehgelenk 20 aus der folgenden Gruppe ausgewählt, die besteht aus: einem Scharnier, einem Filmscharnier, einer Verjüngung des Materials zur Erzeugung geringerer Steifigkeit entlang einer Torsionsachse, einem Gelenk mit einer Rotationsachse, einem Mittel zur Verbindung des Oberteils 10 mit dem Verbindungselement 18 oder zur Verbindung des Unterteils 12 mit dem Verbindungselement 18, das die Verschiebung des Unterteils 12 in Bezug auf das Oberteil 10 entlang der Längserstreckung 8 erlaubt, etc.

Ausführungsformen, bei denen die Gelenke durch Filmscharniere zur Verfügung gestellt sind, stellen somit eine sehr einfache Art und Weise zur Verfügung, um die Gelenke für einen Fin-Ray-Wischer zur Verfügung zu stellen. Das Wischblatt 2 kann einteilige, insbesondere werkzeugfallend, zur Verfügung gestellt werden. Gemäß typischen Ausführungsformen haben die Filmscharniere eine hohe Dehnbarkeit. Dies kann zum Beispiel durch ein Material ausgewählt aus der Gruppe PP, PE, POM, und PA, zur Verfügung gestellt werden. Alternativ können die Filmscharniere aus einem oder mehreren Materialen aus einer Gruppe bestehend aus: TPE (Thermoplastischem Elastomer), beispielsweise TPE-S, TPE-O, TPE-U, TPE-A TPE-V und TPE-E hergestellt sein.

Die Verbindungselemente 18 sind entlang der Längserstreckung 8 des Wischblatts 2 voneinander beabstandet. Die Abstände sind vorteilhafterweise kleiner als 50 mm, insbesondere kleiner als 30 mm. Dadurch kann eine besonders hohe Flexibilität der Scheibenwischvorrichtung, insbesondere ihres Unterteils 12, und gute Anpassung an die Krümmung und Krümmungsänderungen der zu wischenden Scheibe 4 gewährleistet werden.

Figur 5B zeigt eine schematische Darstellung des Wischblatts 2 nach Figur 5A in einer an die Scheibe 4 angelegten Stellung. Da die Scheibe 4 eine Krümmung hat, wirken beim Anlegen des Wischblatts 2 an die Scheibe 4 Kontaktdruckkräfte auf das Unterteil 12. Da das Oberteil 10 und das Unterteil 12 biegbare Balken und die Verbindungselemente 18 drehbar an Oberteil 10 und Unterteil 12 gelagert sind, sind das Oberteil 10 und das Unterteil 12 gegeneinander verschiebbar. Durch die von unten auf das Unterteil 12 wirkenden Druckkräfte biegt sich das Wischblatt 2 in diejenige Richtung, aus der die Druckkräfte kommen, und legt sich genau an die Krümmung der Scheibe 4 an.

Durch den Aufbau der hier beschriebenen Ausführungsformen, findet bei einer Krafteinwirkung auf das Unterteil 12 (durch die Scheibe 4) eine Biegung des Unterteils 12 in die Richtung statt, aus der die Kraft wirkt. Dies ist durch die Verbindung des Oberteils 10 und des Unterteils 12 an der Verbindungsposition 34, die Form, und durch Drehgelenke 20 an der Verbindung zwischen den Verbindungselementen 18 und dem Ober- bzw. Unterteil gegeben. Eine Scheibenwischvorrichtung gemäß hier beschriebener Ausführungsformen nutzt den Effekt von Schwanzflossen bestimmter Fische, die bei seitlichem Druck nicht in Druckrichtung ausweichen, sondern sich in entgegengesetzte Richtung wölben, d. h. in die Richtung, aus der der Druck kommt. Dieses Prinzip wird auch als Flossenstrahl-Prinzip oder "Fin Ray"-Prinzip bezeichnet. Dadurch hat eine Scheibenwischvorrichtung gemäß den hierin beschriebenen Ausführungsformen den Vorteil einer verbesserten Anpassung an eine Scheibe 4 eines Kraftfahrzeugs. Bei einem herkömmlichen Scheibenwischblatt ist dessen Oberteil üblicherweise starr, d. h. es ist nicht biegbar ausgebildet.

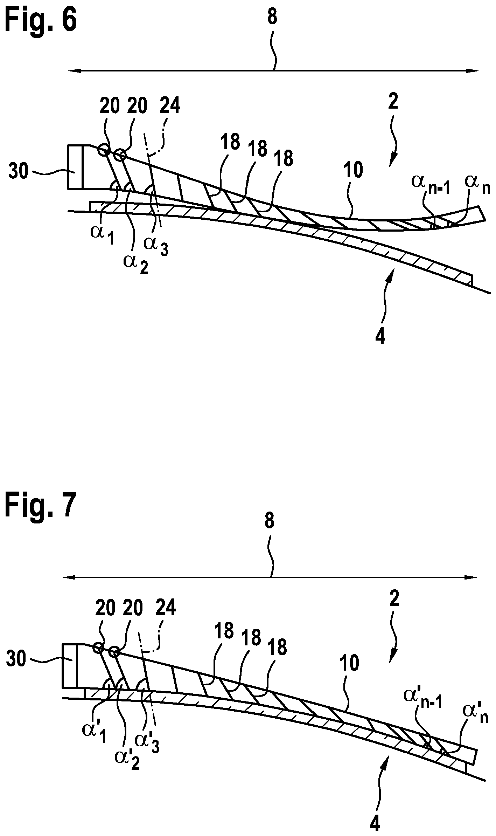

Figuren 6 und 7 zeigen schematische Darstellungen eines Wischblatts 2 einer Scheibenwischvorrichtung für ein Fahrzeug, insbesondere für ein Kraftfahrzeug, in einer Grundstellung (Figur 6), d.h. in einem unbelastetem Zustand, und in einer an eine Scheibe 4 angelegten Stellung (Figur 7) gemäß den hierein beschrieben Ausführungsformen. Das Wischblatt 2 umfasst ein langgestrecktes Oberteil 10 und ein langgestrecktes Unterteil 12, welche zumindest teilweise biegbar ausgestaltet sind. Des Weiteren sind mehrere Verbindungselemente 18 zum Verbinden des Oberteils 10 und des Unterteils 12 vorgesehen, wobei die Verbindungselemente 18 entlang der Längserstreckung 8 des Wischblatts 2 voneinander beabstandet sind. Die Verbindungselemente 18 sind ausgelegt, um eine Bewegung des Oberteils 10 und des Unterteils 12 relativ zu einander mit einer Bewegungskomponente entlang der Längserstreckung 8 des Wischblatts 2 zu ermöglichen. Des Weiteren sind die Verbindungselemente 18 relativ zum Unterteil 12 so angeordnet, dass sich in einem unbelasteten Zustand des Wischblatts 2 ein Winkel αₙ der jeweiligen Längsachsen 24 der Verbindungselemente 18 relativ zum Unterteil 12 zumindest teilweise entlang der Längserstreckung 8 des Wischblatts 2 verändert, insbesondere stetig verändert bzw. monoton oder streng monoton verändert.

In dem in Figur 6 dargestellten Wischblatt 2 im unbelastetem Zustand sind die Winkel αₙ der jeweiligen Längsachsen 24 der Verbindungselemente 18 relativ zum Unterteil 12, die sich entlang der Längserstreckung 8 des Wischblatts 2 ändern, mit α₁, α₂, α₃, ... αₙ₋₁, αₙ bezeichnet. In einem belasteten Zustand des Wischblatts 2, d.h. in einer an die Scheibe 4 angelegten Stellung, wie sie beispielhaft in Figur 7 dargestellt ist, verändern sich die Winkel αₙ der jeweiligen Längsachsen 24 der Verbindungselemente 18 relativ zum Unterteil 12 im Vergleich zum unbelasteten Zustand. Um dies zum Ausdruck zu bringen, sind die Winkel αₙ der jeweiligen Längsachsen 24 der Verbindungselemente 18 relativ zum Unterteil 12, die sich entlang der Längserstreckung 8 des Wischblatts 2 ändern, in dem in Figur 7 dargestellten Wischblatt, welches sich in einer an die Scheibe angelegten Position befindet, mit α'₁, α'₂, α'₃, ... α'ₙ₋₁, α'ₙ bezeichnet.

Gemäß Ausführungsformen der Scheibenwischvorrichtung, welche mit anderen Ausführungsformen kombiniert werden können, weist das Wischblatt 2 zumindest einen ersten Bereich auf, in dem der Winkel αₙ der Längsachsen 24 der Verbindungselemente 18 relativ zum Unterteil 12 entlang der Längserstreckung 8 des Wischblatts 2 zu einem Wischblattende hin abnimmt, insbesondere monoton, insbesondere streng monoton, abnimmt. Ferner kann das Wischblatt 2 zumindest einen zweiten Bereich aufweisen, in dem der Winkel αₙ der Längsachsen 24 der Verbindungselemente 18 relativ zum Unterteil 12 entlang der Längserstreckung 8 des Wischblatts 2 zu einem Wischblattende hin zunimmt, insbesondere monoton, insbesondere streng monoton, zunimmt. Gemäß Ausführungsformen, wie beispielhaft in den Figuren 6 und 7 dargestellt, ist der zweite Bereich des Wischblatts 2, in dem der Winkel αₙ der Längsachsen 24 der Verbindungselemente 18 relativ zum Unterteil 12 entlang der Längserstreckung 8 des Wischblatts 2 zu einem Wischblattende hin zunimmt, an einer inneren Position des Wischblatts 2 angeordnet, welche sich in der Nähe des Befestigungsteils 30 des Wischblatts 2 befindet. Dadurch kann eine Scheibenwischvorrichtung zur Verfügung gestellt werden, welche eine besonders gute Anpassung an die Krümmung einer Scheibe 4 ermöglicht. Ferner kann ein weitgehend gleichmäßiger Anpressdruck der Scheibenwischvorrichtung auf der Scheibe 4 als auch eine homogene Kraftverteilung der Scheibenwischvorrichtung bereitgestellt werden, so dass eine hohe Wischqualität bereitgestellt wird.

Gemäß Ausführungsformen des Wischblatts 2, welche mit anderen Ausführungsformen kombiniert werden können, sind die Verbindungselemente 18, insbesondere in einem unbelastetem Zustand des Wischblatts 2, so an dem Unterteil 12 befestigt, dass die Längsachsen 24 der Verbindungselemente 18 in Winkeln αₙ zum Unterteil 12 verlaufen, die zwischen einem unteren Winkelgrenzwert αₙᵤ und einem oberen Grenzwert αₙₒ liegen. Gemäß Ausführungsformen ist der untere Winkelgrenzwert αₙᵤ = 10°, insbesondere αₙᵤ = 15°, insbesondere αₙᵤ = 20° und der obere Winkelgrenzwert αₙₒ = 80°, insbesondere αₙₒ = 90°, insbesondere αₙₒ = 100°. Dies gewährleistet vorteilhafterweise eine besonders gute Übertragung einer auf das Unterteil 12 wirkenden Kraft auf das Oberteil 10.

Gemäß Ausführungsformen der Scheibenwischvorrichtung, welche mit anderen Ausführungsformen kombiniert werden können, sind die Verbindungselemente 18 derart konfiguriert sind, dass sich der Abstand zwischen dem Oberteil 10 und dem Unterteil 12 zumindest teilweise entlang der Längserstreckung 8 des Wischblatts 2 verändert, insbesondere in einem ersten Bereich stetig verkleinert und in einem zweiten Bereich stetig vergrößert. Der Abstand zwischen dem Oberteil 10 und dem Unterteil 12 entlang der Längserstreckung 8 des Wischblatts 2 kann auch einen Bereich umfassen, in welchem der Abstand zwischen dem Oberteil 10 und dem Unterteil 12 entlang der Längserstreckung 8 des Wischblatts 2 im Wesentlichen konstant ist. Der Abstand zwischen dem Oberteil 10 und dem Unterteil 12 ist am Befestigungsteil 30 größer als am gegenüberliegenden Ende, an welchem sich die Verbindungsposition 34 befindet.

Gemäß Ausführungsformen des Wischblatts 2, welche mit anderen Ausführungsformen kombiniert werden können, beträgt der innere (dem Befestigungsteil 30 zugewandte) Abstandswert mindestens 15 mm, insbesondere mindestens 25 mm, insbesondere mindestens 35 mm. Gemäß Ausführungsformen, welche mit anderen Ausführungsformen kombiniert werden können, beträgt der äußere Abstandswert mindestens 10 mm, insbesondere mindestens 12,5 mm, insbesondere mindestens 15 mm. Gemäß Ausführungsformen, welche mit anderen Ausführungsformen kombiniert werden können, beträgt der mittlere Abstandswert mindestens 7,5 mm, insbesondere mindestens 9 mm, insbesondere mindestens 12,5 mm.

Wie in den Figuren 6 bis 7 beispielhaft dargestellt, sind die Verbindungselemente 18 gemäß Ausführungsformen, welche mit anderen Ausführungsformen kombiniert werden können, gelenkig mit dem Unterteil 12 und/oder dem Oberteil 10 verbunden. Insbesondere sind die Verbindungselemente 18 mit dem Unterteil 12 und/oder dem Oberteil 10 mittels eines ersten Filmscharniers 20 verbunden. Das erste Filmscharnier 20 kann einteilig mit dem Verbindungselement 18 und dem Oberteil 10 und/oder dem Unterteil 12 ausgebildet sein. Die einteilige Ausgestaltung der Filmscharniere erlaubt eine einfache und kostengünstige Herstellung.

Gemäß Ausführungsformen des Wischblatts, welche mit anderen hierin beschriebenen Ausführungsformen kombiniert werden können, umfasst das Wischblatt 2 einen ersten Bereich mit einer ersten Krümmung ω<0 und einen zweiten Bereich mit einer zweiten Krümmung ω>0. Ferner kann das Wischblatt 2 gemäß Ausführungsformen einen dritten Bereich mit einer dritten Krümmung ω<0 aufweisen, wobei der zweite Bereich des Wischblatts 2 mit der zweiten Krümmung ω>0 zwischen dem ersten Bereich mit der ersten Krümmung ω<0 und dem dritten Bereich mit der dritten Krümmung ω<0 angeordnet ist, wie es beispielhaft in Figur 6 gezeigt ist. Somit kann eine Scheibenwischvorrichtung zur Verfügung gestellt werden mit welcher ein weitgehend gleichmäßiger Anpressdruck auf die Scheibe 4 realisiert werden kann. Ferner kann eine Scheibenwischvorrichtung bereitgestellt werden, welche eine verbesserte Anpassung an die Scheibe 4 und eine hohe Wischqualität aufweist.

Gemäß weiteren Ausführungsformen kann zusätzlich zu einem für Fin-Ray-Wischer verwendbaren Quickfix-Befestigungsverschluss, bei dem die gesamte Scheibenwischvorrichtung von einer Antriebswelle 33 am Fahrzeug entfernt wird, ein Mechanismus zur Verfügung gestellt werden, um das Wischblatt 2 einer Scheibenwischvorrichtung von der Scheibe 4 abzuheben bzw. auf diese aufzusetzen. Dies vereinfacht weiter die Benutzung, zum Beispiel für eine manuelle Reinigung der Scheibe 4.

## Patentansprüche

1. Scheibenwischvorrichtung zum Wischen einer Scheibe (4) eines Fahrzeugs, insbesondere eines Kraftfahrzeugs, umfassend einen Wischarm (1) mit einem Wischblatt (2), welches umfasst:
- ein langgestrecktes Oberteil (10), das zumindest teilweise biegbar ausgestaltet ist,
- ein langgestrecktes Unterteil (12), das zumindest teilweise biegbar ausgestaltet ist, und
- mehrere Verbindungselemente (18) zum Verbinden des Oberteils (10) und des Unterteils (12), wobei die Verbindungselemente (18) entlang einer Längserstreckung (8) des Wischblatts (2) voneinander beabstandet und an dem Oberteil (10) und/oder dem Unterteil (12) mittels eines Drehgelenks (20) angebracht sind, wobei die Verbindungselemente (18) ausgelegt sind, um eine Bewegung des Oberteils (10) und des Unterteils (12) relativ zueinander mit einer Bewegungskomponente entlang einer Längserstreckung (8) des Wischblatts (2) zu ermöglichen,
**dadurch gekennzeichnet,**
**dass** die Scheibenwischvorrichtung ferner eine Abdeckvorrichtung (40) aufweist, welche an einer Oberseite (11) des Oberteils (10) anbringbar ist und welche dafür ausgelegt ist, das Wischblatt (2) an einer der Scheibe (4) abgewandten Seite des Wischblatts (2) abzudecken, wobei der Wischarm (1) einen Wischblattkopf (70) aufweist, und wobei sich die Abdeckvorrichtung (40) zusätzlich über den Wischblattkopf erstreckt, **dass** die dem Wischblatt (2) zugewandte Seite der Abdeckvorrichtung (40) mindestens einen Druckknopf aufweist, welcher dafür ausgelegt ist, in entsprechende Öffnungen in dem Oberteil (10) des Wischblatts (2) und/oder des Wischblattkopfs (70) einzugreifen
oder
**dass** die Abdeckvorrichtung (40) ein ferromagnetisches Material enthält, wobei das Oberteil (10) des Wischblatts (2) und/oder der Wischblattkopf (70) mindestens ein Permanentmagnetelement aufweisen, derart, dass die Abdeckvorrichtung (40) mittels Magnetkraft an dem Wischarm (1) haftet.

2. Scheibenwischvorrichtung nach Anspruch 1, wobei die Abdeckvorrichtung (40) seitliche Führungsnuten (41) aufweist, welche dafür ausgelegt sind, in seitliche Strukturen am Oberteil (10) des Wischblatts (2) einzugreifen.

3. Scheibenwischvorrichtung nach einem der Ansprüche 1 bis 2, wobei die Abdeckvorrichtung (40) eine Klebefläche aufweist, welche dafür ausgelegt ist, mit einer Oberseite des Oberteils (10) des Wischblatts (2) und/oder des Wischblattkopfs (70) verklebt zu werden.

4. Scheibenwischvorrichtung nach einem der Ansprüche 1 bis 3, wobei die dem Wischblatt (2) zugewandte Seite der Abdeckvorrichtung (40) und die Oberseite des Oberteils (10) des Wischblatts (2) und/oder des Wischblattkopfs (70) eine Klettverbindung bilden.

5. Scheibenwischvorrichtung nach einem der Ansprüche 1 bis 4, wobei das Oberteil (10) des Wischblatts (2) eine nach oben vorstehende umlaufende Kante aufweist, die dafür ausgelegt ist, die Abdeckvorrichtung (40) anzuklemmen.

6. Scheibenwischvorrichtung nach einem der Ansprüche 1 bis 5, wobei die Oberseite der Abdeckvorrichtung (40) reflektierend ist.

7. Scheibenwischvorrichtung nach einem der Ansprüche 1 bis 6, wobei die Abdeckvorrichtung (40) ein Material enthält, welches gewählt ist aus der Gruppe, die besteht aus Gummi, Carbon, POM, PA, TPE, insbesondere TPE-S, TPE-O, TPE-U, TPE-A TPE-V und TPE-E, oder jedweder Kombination davon.

## Claims

1. Windscreen wiper device for wiping a window (4) of a vehicle, in particular a motor vehicle, comprising a wiper arm (1) with a wiper blade (2) which comprises:
- an elongate upper part (10), which is configured to be at least partially bendable,
- an elongate lower part (12), which is configured to be at least partially bendable, and
- a plurality of connecting elements (18) for connecting the upper part (10) and the lower part (12), wherein the connecting elements (18) are spaced apart from one another along a longitudinal extent (8) of the wiper blade (2) and are attached to the upper part (10) and/or to the lower part (12) by means of a rotary joint (20), wherein the connecting elements (18) are designed in order to permit a movement of the upper part (10) and of the lower part (12) relative to each other with a movement component along a longitudinal extent (8) of the wiper blade (2),
**characterized in that** the windscreen wiper device furthermore has a covering device (40) which can be attached to an upper side (11) of the upper part (10) and is designed for covering the wiper blade (2) on a side of the wiper blade (2) facing away from the window (4), wherein the wiper arm (1) has a wiper blade head (70), and wherein the covering device (40) additionally extends over the wiper blade head, **in that** that side of the covering device (40) which faces the wiper blade (2) has at least one snap fastener which is designed to engage in corresponding openings in the upper part (10) of the wiper blade (2) and/or of the wiper blade head (70), or **in that** the covering device (40) contains a ferromagnetic material, wherein the upper part (10) of the wiper blade (2) and/or the wiper blade head (70) have/has at least one permanent magnet element in such a manner that the covering device (40) adheres to the wiper arm (1) by means of magnetic force.

2. Windscreen wiper device according to Claim 1, wherein the covering device (40) has lateral guide grooves (41) which are designed to engage in lateral structures on the upper part (10) of the wiper blade (2) .

3. Windscreen wiper device according to either of Claims 1 and 2, wherein the covering device (40) has an adhesive surface which is designed to be adhesively bonded to an upper side of the upper part (10) of the wiper blade (2) and/or of the wiper blade head (70).

4. Windscreen wiper device according to one of Claims 1 to 3, wherein that side of the covering device (40) which faces the wiper blade (2) and the upper side of the upper part (10) of the wiper blade (2) and/or of the wiper blade head (70) form a touch-and-close connection.

5. Windscreen wiper device according to one of Claims 1 to 4, wherein the upper part (10) of the wiper blade (2) has an upwardly protruding encircling edge which is designed to clamp the covering device (40).

6. Windscreen wiper device according to one of Claims 1 to 5, wherein the upper side of the covering device (40) is reflective.

7. Windscreen wiper device according to one of Claims 1 to 6, wherein the covering device (40) contains a material which is selected from the group which consists of rubber, carbon, POM, PA, TPE, in particular TPE-S, TPE-O, TPE-U, TPE-A TPE-V and TPE-E, or any combination thereof.

## Revendications

1. Dispositif d'essuie-glace pour essuyer une vitre (4) d'un véhicule, en particulier d'un véhicule automobile, comprenant un bras d'essuie-glace (1) avec un balai d'essuie-glace (2) qui comprend :
- une partie supérieure allongée (10) qui est configurée de manière au moins partiellement flexible,
- une partie inférieure allongée (12) qui est configurée de manière au moins partiellement flexible, et
- plusieurs éléments de connexion (18) pour connecter la partie supérieure (10) et la partie inférieure (12), les éléments de connexion (18) étant espacés les uns des autres le long d'une étendue longitudinale (8) du balai d'essuie-glace (2) et étant montés au niveau de la partie supérieure (10) et/ou de la partie inférieure (12) au moyen d'une articulation pivotante (20), les éléments de connexion (18) étant conçus pour permettre un déplacement de la partie supérieure (10) et de la partie inférieure (12) l'une par rapport à l'autre avec une composante de déplacement le long d'une étendue longitudinale (8) du balai d'essuie-glace (2),
**caractérisé**
**en ce que** le dispositif d'essuie-glace présente en outre un dispositif de recouvrement (40) qui peut être monté sur un côté supérieur (11) de la partie supérieure (10) et qui est conçu pour recouvrir le balai d'essuie-glace (2) au niveau d'un côté du balai d'essuie-glace (2) opposé à la vitre (4), le bras d'essuie-glace (1) présentant une tête de balai d'essuie-glace (70) et le dispositif de recouvrement (40) s'étendant en outre par-dessus la tête de balai d'essuie-glace,
**en ce que** le côté du dispositif de recouvrement (40) tourné vers le balai d'essuie-glace (2) présente au moins un bouton-pression qui est conçu pour s'engager dans des ouvertures correspondantes dans la partie supérieure (10) du balai d'essuie-glace (2) et/ou de la tête de balai d'essuie-glace (70) ou
**en ce que** le dispositif de recouvrement (40) comprend un matériau ferromagnétique, la partie supérieure (10) du balai d'essuie-glace (2) et/ou la tête de balai d'essuie-glace (70) présentant au moins un élément d'aimant permanent de telle sorte que le dispositif de recouvrement (40) adhère au bras d'essuie-glace (1) par le biais de la force magnétique.

2. Dispositif d'essuie-glace selon la revendication 1, dans lequel le dispositif de recouvrement (40) présente des rainures de guidage latérales (41) qui sont conçues pour s'engager dans des structures latérales au niveau de la partie supérieure (10) du balai d'essuie-glace (2).

3. Dispositif d'essuie-glace selon l'une quelconque des revendications 1 et 2, dans lequel le dispositif de recouvrement (40) présente une surface adhésive qui est conçue pour être collée à un côté supérieur de la partie supérieure (10) du balai d'essuie-glace (2) et/ou de la tête de balai d'essuie-glace (70).

4. Dispositif d'essuie-glace selon l'une quelconque des revendications 1 à 3, dans lequel le côté du dispositif de recouvrement (40) tourné vers le balai d'essuie-glace (2) et le côté supérieur de la partie supérieure (10) du balai d'essuie-glace (2) et/ou de la tête de balai d'essuie-glace (70) forment une connexion de type Velcro.

5. Dispositif d'essuie-glace selon l'une quelconque des revendications 1 à 4, dans lequel la partie supérieure (10) du balai d'essuie-glace (2) présente une arête périphérique saillant vers le haut, qui est conçue pour se raccorder au dispositif de recouvrement (40).

6. Dispositif d'essuie-glace selon l'une quelconque des revendications 1 à 5, dans lequel le côté supérieur du dispositif de recouvrement (40) est réfléchissant.

7. Dispositif d'essuie-glace selon l'une quelconque des revendications 1 à 6, dans lequel le dispositif de recouvrement (40) contient un matériau choisi dans le groupe constitué de caoutchouc, de carbone, de POM, de PA, de TPE, en particulier de TPE-S, de TPE-O, de TPE-U, de TPE-A, de TPE-V et de TPE-E, ou de toute combinaison de ceux-ci.
